# EUROPEAN PATENT APPLICATION

(11) **EP 2 899 438 A1**
(43) Date of publication of application: **29.07.2015**
(21) Application number: 14152677.2
(22) Date of filing: 27.01.2014
(51) Int. Cl.: F16L 3/10, F16L 3/223, F16L 3/237, H02G 3/32, F16B 2/10, H02G 7/08

(54) **Cable mounting device**

(71) Applicant: Industrispar Svenska AB, 271 39 Ystad (SE)
(72) Inventor: Andersson, Gert, 271 51 Ystad (SE)
(74) Representative: Persson, Albin

(57) **Abstract**

Mounting device for electric cable on a pole comprising a first clamp half (1) having a first end and a second end and defining a first concave semi-cylindrical face (11 a) and a second concave semi-cylindrical face (11 b), and a second clamp half (2) having a first end and a second end and defining a first concave semi-cylindrical face (12a) and a second concave semi-cylindrical face (12b), and a hinge pin (4) forming together with said first clamp and said second clamp a clamp assembly defining at least one passage there through for clamping cylindrical objects of at least two different diameters, and mounting means carried by said first clamp half (1) or said second clamp half (2) for mounting the device on a pole.

## Description

### TECHNICAL FIELD

The present invention concerns cable mounting devices, in particular cable mounting devices for bare electrical cables within electric railway lines.

### PRIOR ART

Mounting systems and mounting devices for overhead conducting wire are known from for example US 4 570 884. Installation of overhead conductor wires of railways are known from for example GB 1 379 791.

### SUMMARY OF THE INVENTION

To facilitate the mounting of a cable, such as an overhead wire within electrical railway lines, the mounting device in accordance with the invention comprises two clamp halves and a hinge pin forming together a clamp assembly. The clamp halves each provide complementary portions of cylindrical surfaces, that when combined forms at least two cylindrical or fenestrated cylindrical passages for clamping a cable having one of two or more predefined diameters. A cylindrical fenestrated surface may in this context be interpreted as a cylindrical surface covering less than 360 degrees of the circumference, and a void in the circumference would be less than 180 degrees of continuous void. The mounting device further comprises mounting means allowing the mounting device to be mounted to a pole or similar support means.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic perspective view of one embodiment of a mounting device in accordance with the invention with a piece of a cable.
- Fig. 2: is a schematic perspective view of the mounting device shown in Fig. 1 in an opened position without the cable.
- Fig. 3a: is a side view of a mounting device attached to a pole using hooks, and showing the mounting device in the closed position around a piece of cable.
- Fig. 3b: is a close up of the mounting device of fig. 3a shown in a side view.
- Fig. 4: shows a side view of the mounting device in fig. 2.
- Fig. 5: is a view from behind showing particularly the pair of hooks used to attach the mounting device of fig.3a to a pole.

### DETAILED DESCRIPTION

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

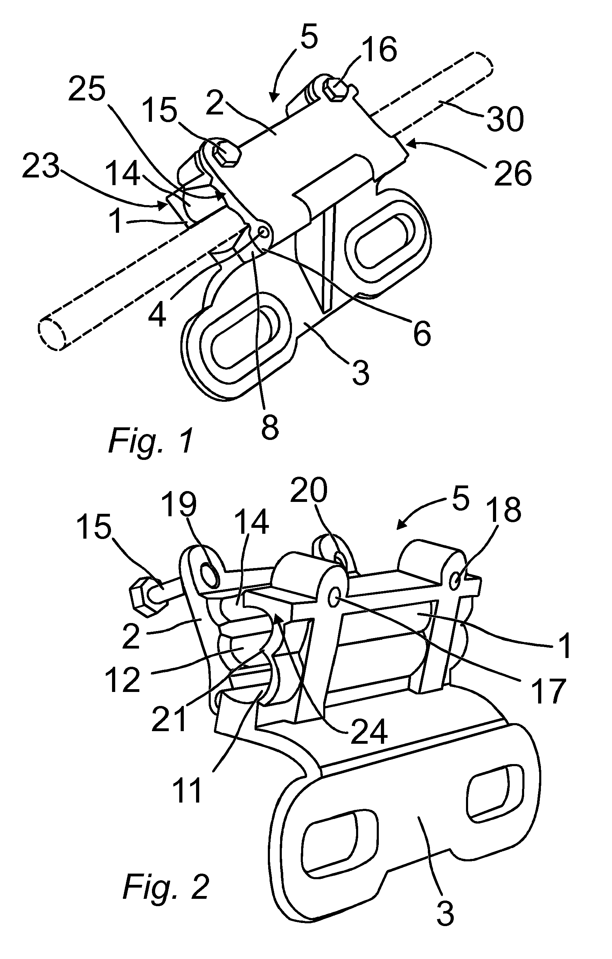

Figure 1 is a schematic perspective view of one embodiment of a mounting device 10 in accordance with the invention with a piece of a cable 30. In the embodiment shown in Figure 1 and Figure 2 the mounting device 10 comprises a first clamp halve 1 integrally formed with a support structure 3, and a second clamp halve 2, attached to the first clamp halve 1 with the aid of a hinge pin 4 arranged in longitudinal bores arranged in the first and second clamp respectively and aligned with each other in a longitudinal direction such that the two clamp halves can be opened and closed relatively to each other. In such a closed position inner surfaces 11, 12 of the clamp halves defines a longitudinal clamp space 14 having a particular shape when viewed in cross section.

The first clamp half 1 have a first end 23 and a second end 24 and defines a first concave semi-cylindrical inner surface 11 a and a second concave semi-cylindrical inner surface 11b. The second clamp half 2 having a first end 25 and a second end 26 and defining a first concave semi-cylindrical face 12a and a second concave semi-cylindrical face 12b

The hinge pin 4 forms together with said first clamp and said second clamp a clamp assembly 5 defining at least two passages there through for clamping cylindrical objects of at least two different diameters.

The clamp halves 1, 2 are provided with locking means 15, 16 to secure the halves in the closed position and to provide sufficient pressure to secure the cable. Preferably these locking means comprises one or preferably two bolts for bores 17,18,19,20 arranged opposite the hinge pin. Preferably bores 17,18 of the first clamp half 1 are threaded to make away with the need for a nut.

The mounting device may be provided with bolt retaining means, for example frictional resilient inlays in the bores to prevent unintentional loss of the bolts.

The bolt retaining means may alternatively preferably comprise a threaded bore for the bolt head end which may remove the need for other retaining means or special care or special arrangements for avoiding dropping the bolts, they can be screwed through the first bore beforehand and remain there until it is time to secure the cable.

The shape of the inner surfaces 11, 12 enables the mounting device to be used for cables of a first diameter or for cables of a second diameter without any modification of the mounting device. When a cable worker uses the mounting device he places the cable either in a first position in the clamp or in a second position in the clamp depending on cable diameter.

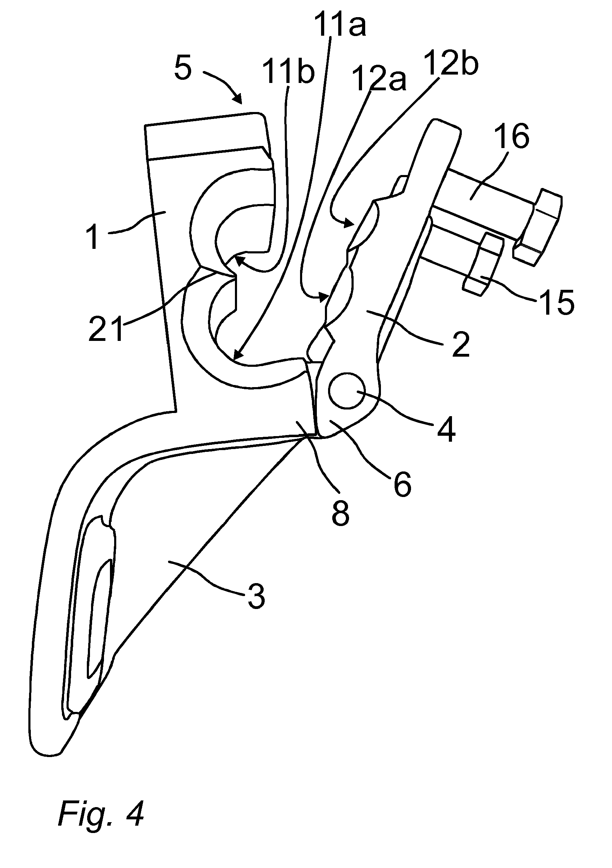

The shape of the inner surfaces, when the clamp halves is in the closed position, outlines an elongated cable canal with a cross section resembling the digit eight; "8". In the open position, as can be seen from figure 4, clamp halves 1, 2 preferably are asymmetric in that one of the clamp halves provides an inner surface defining a major portion of the outline of the elongated canal when viewed in cross section.

In other words, the word "semi-cylindrical" used here to describe portions of the inner surface of the first and second clamp half, is not in this context meant to refer to a cylindrical surface constituting exactly 50% of a complete cylindrical surface, i.e., from 0 to 180 degrees, but rather to refer to a cylindrical surface representing a portion of a cylindrical surface corresponding to x degrees, x being in the interval between 0 and 360 degrees. The other clamp half then having a surface corresponding substantially to the remaining portion of a complete cylinder, i.e. 360-x degrees. A similar reasoning applies to the word "clamp half" in that the extent of each half is not limited to a 50 - 50 distribution. Not by inner surface area, circumferential coverage, nor by weight nor any other way of determining extent.

For the purpose of the present invention the digit "8" is said to be made up of two circular segments of different diameters and combined to form the digit "8". Note that the concave semi-cylindrical inner surfaces 11a, 11 b, 12a, 12b, c.f. Figure 4, may define two parallel separate cylindrical passages. However, and preferably, the cylindrical passages are made to overlap forming one continuous passage in such a way that a part of a separating wall can be dispensed with. This will entail that the two semi-cylindrical faces directly may have a common border, as opposed to separate faces were another surface will always separate them apart. The border may be arranged as a common edge 21. This is an advantage that will save material and also may dispense with sharp edges. It may also make it easier for the cable worker to place the cable in the correct semi-cylindrical cavity 11a, 11 b, 12a, 12b when the mounting device 10 is in its open position. The cable worker may place a cable of a first diameter in the canal corresponding to a lower portion of the digit 8, or he may place a cable of a second diameter in the canal corresponding to an upper portion of the digit 8.

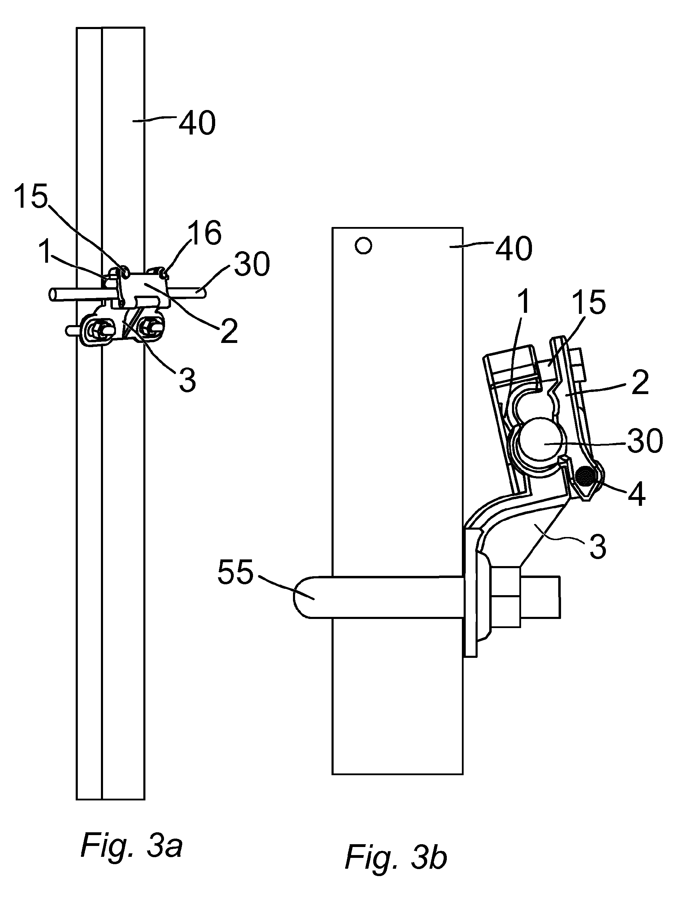

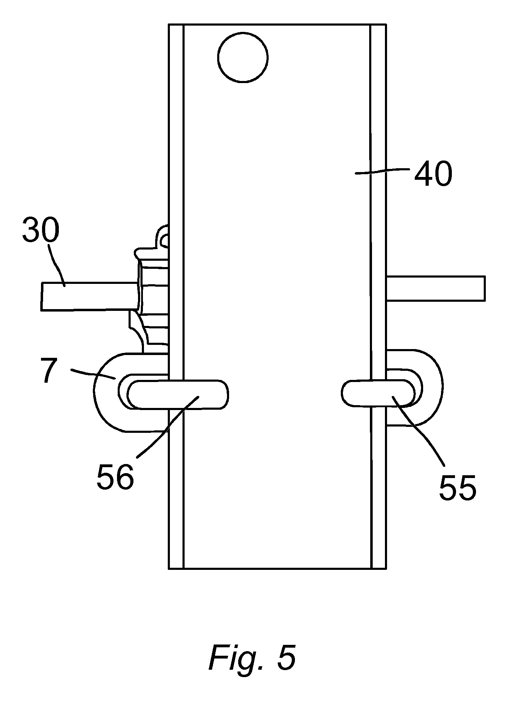

The support structure 3 provides a support surface 7 to abut a pole surface of a pole. The pole surface is preferably vertical. The support structure preferably is provided with means for attaching the mounting device to a pole. These means may comprise holes for bolts, hooks or a U-bolt to attach the mounting device to a pole, c.f. Figures 3a, 3b and 5. Two hooks may be used to attach the mounting device to a pole of U or H cross section.

The clamp halves 1, 2 are preferably arranged above the support structure 3, the clamp halves forming an opening open upwards when in the open position, and the clamp half providing an inner surface providing a major portion of the cable canal, when seen in cross section, is the one clamp half formed integral with the support structure 3. A longitudinal axis of the digit eight "8" may be arranged to be vertical, but are preferably arranged with an angle against the vertical line to facilitate easy mounting by the cable worker putting the cable into place and who also tightens the bolts 15, 16.

To put it in slightly other words, the clamp halves 1, 2 can be seen as principally rectangular boxes having a longitudinal extension in a longitudinal direction from the first end 23, 25 to the second end 24, 26, a transversal extension in a transversal direction orthogonal to the longitudinal extension extending from a first side end to a second side end, and a thickness allowing for inner concave surfaces 11, 12. The hinge pin is arranged in the longitudinal direction at one side end, the hinge pin side end, of a clamp half and extending from the first end to the second end forming a hinged connection between the first and second clamp half, making them able to open and close relatively to each other and around the cable, and forming an opening opposite said hinged connection. The longitudinal direction being the direction of the cable to be mounted.

Preferably the side end with the hinge pin is arranged to be closer to the support structure than the opposite side end.

In a preferred embodiment the side end with the hinge pin is arranged to be closer to the support structure than the opposite side end, the transversal direction being parallel to the vertical direction, or within 30 degrees from the vertical direction, or within 45 degrees from the same, thus letting the clamp halves form an opening upwards for the cable when they are in the open position relatively to each other. The bolt 15, 16 heads are arranged to face away from the pole. This is particularly advantageous as it allows a screw gun to be easily used from a side and held comfortably horizontal or near horizontal, depending on arrangement of transversal direction as disclosed above, for tightening both nuts of hooks 55, 56 attaching the mounting device to the pole 40, and for tightening the bolts 15, 16 closing the clamp halves 1, 2 around the cable 30.

In an alternate embodiment the support structure 3 extends downwards and the clamp halves are thus arranged below the support surface 7. The hinge pin side of the clamp halves is arranged distal to the support structure 3, which support structure attaches to the side end opposite the hinge pin side. With this arrangement, the clamp halves still open upwards allowing the cable to be put into place from the above. All bolts can also be tightened be the use of a screw gun comfortably held in a horizontal or near horizontal position.

It is realised that the inventive idea of the present invention can easily be extended and made to work also for mounting devices to make them clamp cables having one of three or more predefined diameters. This will be accomplished by providing clamp half inner surfaces comprising three or more semi-cylindrical concave surfaces that together with the other clamp half forms three or more fenestrated cylindrical passages.

Further, and regardless of embodiment, a heel 6 may be arranged at one of the clamp halves, and an abutment may be arranged at the other clamp half in the motion path of the heel 6 to limit the opening angle of the clamp halves relatively to each other. The heel 6 is preferably, as shown in Figure 4, arranged on the hinge pin side end of the second clamp half to abut an abutment 8 arranged at a side end portion of the other clamp half adjacent to the hinge pin to limit the opening angle of the clamp halves relatively to each other. The opening angle may be limited to be in the interval 20 to 90 degrees. Preferably it is arranged to be such that the resulting opening for putting the cable into place becomes slightly wider than the largest one of the cable types it is intended for.

The second cable half 2 may advantageously be called a lid since it can be seen as such. Further, the bolts 15, 16 are preferably arranged facing away from the pole, and towards a possible cable worker who has climbed up on a ladder or being in a lift on a mounting device side of the pole.

The mounting device is particularly useful as a return current cable mounting device for train overhead line return current cable. Such return current cable generally comes in one of two variants; copper (Cu) and aluminium (Al). The Cu-cable have different diameter than the Al-cable. It is of course an advantage of the mounting device of the present invention that it can be used with either type of cable without modification or adjustment. There is a reduced risk that personnel bring the wrong type of mounting device when out on a work.

Further advantages include faster mounting. Shorter mounting time is important because working in track requires very short times of dead wires. The invention facilitates extensive use of a screw gun due to innovative arrangement and number of screws or bolts. Note that mounting of this type of cable takes place 8 to 10 meters up in the air. Since the clamp assembly 5 opens upwards when the second clamp half 2 is in an open position the cable readily is positioned in the desired cavity from above.

Since the mounting device comprises one unit and having two retained bolts this also entail a good current conducting capacity.

### Legend

1 First clamp halve
2 Second clamp halve
3 Support structure
4 Hinge pin
5 Clamp assembly
6 Heel
7 Support surface
8 Abutment
10 Mounting device
11 Inner surface of first clamp half
11 a First concave portion of inner surface 11
11b Second concave portion of inner surface 11
12 Inner surface of second clamp half
12a First concave portion of inner surface 12
12b Second concave portion of inner surface 12
14 Clamp space
15, 16 Securing bolts
17, 18 Bores in first clamp halve for bolts
19, 20 Bores in second clamp halve for bolts
21 Common edge
23 First end of first clamp half 1
24 Second end of first clamp half 1
25 First end of second clamp half 2
26 Second end of second clamp half 2
30 Cable (not part of invention)
40 Pole (not part of invention)
51, 52 Holes in support structure
55, 56 Hooks for clamping mounting device to pole

## Claims

1. Mounting device (10) for electric cable (30) on a pole (40), ***characterised* by**
- a first clamp half (1) having a first end (23) and a second end (24) and defining a first concave semi-cylindrical face (11 a) and a second concave semi-cylindrical face (11 b),
- a second clamp half (2) having a first end (25) and a second end (26) and defining a first concave semi-cylindrical face (12a) and a second concave semi-cylindrical face (12b),
- a hinge pin (4) forming together with said first clamp and said second clamp a clamp assembly defining at least one passage there through for clamping cylindrical objects of at least two different diameters, and
- mounting means (51, 52, 55, 56) carried by said first clamp half (1) or said second clamp half (2) for mounting the device on a pole.

2. The mounting device (10) according to claim 1 wherein the clamp halves have a longitudinal extension in a longitudinal direction from the first end (23, 25) to the second end (24, 26), a transversal extension in a transversal direction orthogonal to the longitudinal extension extending from a first side end to a second side end, and a thickness allowing for the inner concave surfaces (11, 12), the hinge pin (4) is arranged in the longitudinal direction at one side end, the hinge pin side end, of a clamp half (1, 2) and extending from the first end (23, 25) to the second end (24, 26), the clamp halves (1, 2) also forming the closeable opening opposite said hinged connection, the longitudinal direction being the direction of the cable to be mounted, and wherein a side end of the clamp halves (1, 2) with the hinge pin (4) is arranged to be closer to the support structure (3) than the opposite side end, the transversal direction being parallel to the vertical direction, or within 30 degrees from the vertical direction, thus letting the clamp halves form an opening upwards for the cable when they are in the open position relatively to each other, and wherein the bolt (15, 16) heads are arranged to face away from the pole.

3. The mounting device (10) according to claim 1 or 2 wherein the clamp assembly defines at least two separate passages through it for clamping cylindrical objects of at least two different diameters.

4. The mounting device according to claim 1 or 2 wherein the clamp assembly (5) defines one single passage through it for clamping cylindrical objects of at least two different diameters, wherein the first concave semi-cylindrical face (11a) and the second concave semi-cylindrical of the first clamp half (1) are arranged to have a common edge (21).

5. The mounting device according to any of the preceding claims, wherein a heel (6) is arranged at the edge on the hinge pin end of one of the clamp halves (1, 2) to abut an abutment (8) arranged on the hinge pin end of the other clamp half (2, 1) to limit the opening angle of the clamp halves relatively to each other.

6. The mounting device according to claim 5 wherein the opening angle may be in the interval 20 to 90 degrees.

7. The mounting device according to claim 5 wherein the opening angle it is arranged to be such that the resulting opening for putting the cable into place becomes slightly wider than the largest one of the two cable types itself.

8. The mounting device according to any of the preceding claims, wherein the mounting device is a railway overhead conducting cable mounting device.
